# EUROPÄISCHE PATENTANMELDUNG

(11) **EP 4 450 848 A1**
(43) Veröffentlichungstag der Anmeldung: **23.10.2024**
(21) Anmeldenummer: 24169894.3
(22) Anmeldetag: 12.04.2024
(51) Int. Cl.: F16H 25/24, F16H 25/20

(54) **SPINDELANTRIEBSEINRICHTUNG, ÜBERGEORDNETE BAUGRUPPE MIT DIESER SPINDELANTRIEBSEINRICHTUNG UND FAHRZEUG MIT DIESER ÜBERGEORDNETEN BAUGRUPPE**

(30) Priorität: 17.04.2023 DE 102023109536
(71) Anmelder: STABILUS GmbH, 56070 Koblenz (DE)
(72) Erfinder: Schneider, Sven, 56564 Neuwied (DE); Fettweiß, Lisa-Marie, 56751 Kollig (DE); Burbulla, David, 56072 Koblenz (DE); Blum, Jürgen, 56112 Lahnstein (DE)
(74) Vertreter: Forresters IP LLP

(57) **Zusammenfassung**

Die Erfindung betrifft eine Spindelantriebseinrichtung (10) umfassend eine mit einem Außengewinde versehene Spindel (12), ein mit dem Außengewinde der Spindel (12) in Gewindeeingriff stehendes Gewindeeingriffselement (16), eine Antriebsbaugruppe (20) mit einer Antriebseinheit (22), welche dazu eingerichtet ist, die Spindel (12) oder das Gewindeeingriffselement (16) anzutreiben, wobei die Spindel (12) oder das Gewindeeingriffselement (16) mit wenigstens einer Verbindungseinheit (14, 18) zur Verbindung der Spindelantriebseinrichtung (10) mit einer übergeordneten, nicht zu der Spindelantriebseinrichtung (10) gehörenden Baugruppe verbunden ist.

Erfindungsgemäß ist vorgesehen, dass die Spindel (12) eine Trapezgewindespindel aus einem Kohlenstoffstahl und mittels wenigstens eines thermochemischen Verfahrens wärmebehandelt ist.

## Beschreibung

Die Erfindung betrifft eine Spindelantriebseinrichtung umfassend eine mit einem Außengewinde versehene Spindel, ein mit dem Außengewinde der Spindel in Gewindeeingriff stehendes Gewindeeingriffselement, eine Antriebsbaugruppe mit einer Antriebseinheit, welche dazu eingerichtet ist, die Spindel oder das Gewindeeingriffselement anzutreiben, wobei die Spindel oder das Gewindeeingriffselement mit wenigstens einer Verbindungseinheit zur Verbindung der Spindelantriebseinrichtung mit einer übergeordneten, nicht zu der Spindelantriebseinrichtung gehörenden Baugruppe verbunden ist.

Spindelantriebseinrichtungen sind beispielsweise im Automobilbereich bekannt und werden beispielsweise zum Öffnen und Schließen von Türen und/oder Heckklappen von Kraftfahrzeugen eingesetzt. Die Anforderungen in Bezug auf Verschleiß und Korrosion sind insbesondere im Automobilbereich sehr hoch, so dass es üblich ist, zur Erfüllung dieser Anforderungen nichtrostende Edelstähle einzusetzen. Gleichzeitig ist es jedoch gewünscht, kostengünstige Bauteile bereitzustellen. Die Gesamtheit der sich widersprechenden Anforderungen ist mit den derzeit bekannten Spindelantriebseinrichtungen nicht zu erfüllen.

Es ist daher Aufgabe der vorliegenden Erfindung, eine verbesserte Spindelantriebseinrichtung bereitzustellen, welche die Gesamtheit der Anforderungen erfüllen kann. Ferner ist es Aufgabe, eine übergeordnete Baugruppe, insbesondere ein Fahrzeug mit einer solchen Spindelantriebseinrichtung anzugeben.

Erfindungsgemäß wird diese Aufgabe im Hinblick auf die Spindelantriebseinrichtung durch den Gegenstand des Patentanspruchs 1 und im Hinblick auf die übergeordnete Baugruppe bzw. auf das Fahrzeug durch die Gegenstände der Patentansprüche 9 und 10 gelöst.

Konkret wird die Aufgabe erfindungsgemäß gelöst durch eine Spindelantriebseinrichtung umfassend eine mit einem Außengewinde versehene Spindel, ein mit dem Außengewinde der Spindel in Gewindeeingriff stehendes Gewindeeingriffselement, eine Antriebsbaugruppe mit einer Antriebseinheit, welche dazu eingerichtet ist, die Spindel oder das Gewindeeingriffselement anzutreiben, wobei die Spindel oder das Gewindeeingriffselement mit wenigstens einer Verbindungseinheit zur Verbindung der Spindelantriebseinrichtung mit einer übergeordneten, nicht zu der Spindelantriebseinrichtung gehörenden Baugruppe verbunden ist, wobei die Spindel eine Trapezgewindespindel aus einem Kohlenstoffstahl und mittels wenigstens eines thermochemischen Verfahrens wärmebehandelt ist.

Trapezgewindespindeln, welche hohe axiale Kräfte übertragen können, werden eingesetzt, um eine rotatorische Bewegung in eine lineare Bewegung umzuleiten. Im Unterschied zum Stand der Technik weist die erfindungsgemäße Spindelantriebseinrichtung eine Trapezgewindespindeln auf, welche aus einem Kohlenstoffstahl ausgebildet ist. Damit können die Rohmaterialkosten deutlich reduziert werden. Die Wärmebehandlung der Spindel ermöglicht die Erfüllung der Anforderungen in Bezug auf Korrosion und Verschleiß.

Als thermochemische Wärmebehandlungen, welche die Verschleiß- und Korrosionseigenschaften der Spindel verbessern können, kommen dabei beispielsweise Verfahren wie Aufkohlen, Borieren, Carbonitrieren, Nitrieren, Nitrocarburieren, Oxidieren, Silicieren oder Vanadieren in Frage.

In vorteilhafter Weiterbildung der Erfindung ist die Spindel mittels mehrerer thermochemischen Verfahren wärmebehandelt. Die Eigenschaften der Spindel können damit weiter verbessert werden.

Vorzugsweise ist die Spindel wenigstens mittels eines Nitrierprozesses wärmebehandelt, so dass die Spindel eine verschleißbeständige Randschicht aufweist. Der Nitrierprozess ist ein Verfahren zur Oberflächenhärtung. Der Kern des Bauteils bleibt dabei unverändert und behält seine Festigkeit, so dass das Verschleiß- und das Korrosionsverhalten der Spindel ohne Auswirkungen auf die Kerneigenschaften verbessert werden kann. Nitrierverfahren wie Nitrocarburieren im Gas oder im Salzbad haben sich dabei als besonders vorteilhaft insbesondere hinsichtlich der Kosten herausgestellt.

Vorzugsweise ist die Spindel oxidiert vorgesehen, so dass diese eine dunkle Oberfläche aufweist. Die Oxidation kann sich dabei vorteilhafterweise an ein Nitrocarburier-Verfahren im Gas oder im Salzbad anschließen.

Im Allgemeinen können im Rahmen der Erfindung die thermochemische Behandlungen Carbonitrieren, Nitrieren und Oxidieren Bestandteil der Wärmebehandlung sein.

Es sind jedoch auch andere thermochemische Verfahren zur Gewährleistung der Korrosionsanforderungen und der verschleißfesten

Randschichteigenschaften möglich.

Durch eine Nachoxidation kann auf der beim Nitrieren entstehende Verbindungsschicht eine zusätzliche dünne Oxidschicht aufgebracht werden, welche die Korrosionsbeständigkeit zusätzlich verbessert.

Gemäß einer vorteilhaften Ausbildung der Spindelantriebseinrichtung kann die Spindel mit einer ersten Verbindungseinheit zur Verbindung der Spindelantriebseinrichtung mit einer übergeordneten, nicht zu der Spindelantriebseinrichtung gehörenden Baugruppe verbunden sein, und das Gewindeeingriffselement kann mit einer zweiten Verbindungseinheit zur Verbindung der Spindelantriebseinrichtung mit einer übergeordneten, nicht zu der Spindelantriebseinrichtung gehörenden Baugruppe verbunden sein.

Alternativ kann als Verbindungseinheit ein mit dem Gewindeeingriffselement direkt oder indirekt verbundenes Stellelement oder Verbindungselement vorgesehen sein.

Gemäß vorteilhaften Ausbildungen der Erfindung kann das Gewindeeingriffselement als Spindelmutter oder Schneckenrad ausgebildet sein.

Vorzugsweise ist die Spindelantriebseinrichtung als elektrischer Spindelantrieb zum Öffnen und/oder Schließen eines bewegbaren Fahrzeugteils vorgesehen. Das bewegbare Fahrzeugteil kann beispielsweise eine Fahrzeugtür, eine Heckklappe, eine Motorhaube, eine Laderaumtür oder eine Gepäckraumklappe sein.

Ein nebengeordneter Aspekt der Erfindung betrifft eine übergeordnete Baugruppe mit einer zuvor beschriebenen Spindelantriebseinrichtung. Die übergeordnete Baugruppe kann beispielsweise ein Fahrzeug sein. In diesem Fall kann die Spindelantriebseinrichtung zur Verstellung eines relativ zu einer Karosserie eines Fahrzeugs bewegbaren Fahrzeugteils vorgesehen sein. Das bewegbare Fahrzeugteil kann eine beispielsweise eine Fahrzeugtür, eine Fahrzeugklappe oder eine Motorhaube sein. Als übergeordnete Baugruppe sind jedoch jegliche Gegenstände denkbar, welche eine bewegbare Klappe aufweisen.

Die vorliegende Erfindung wird im Folgenden anhand eines Ausführungsbeispiels beschrieben.

Es stellt dar:

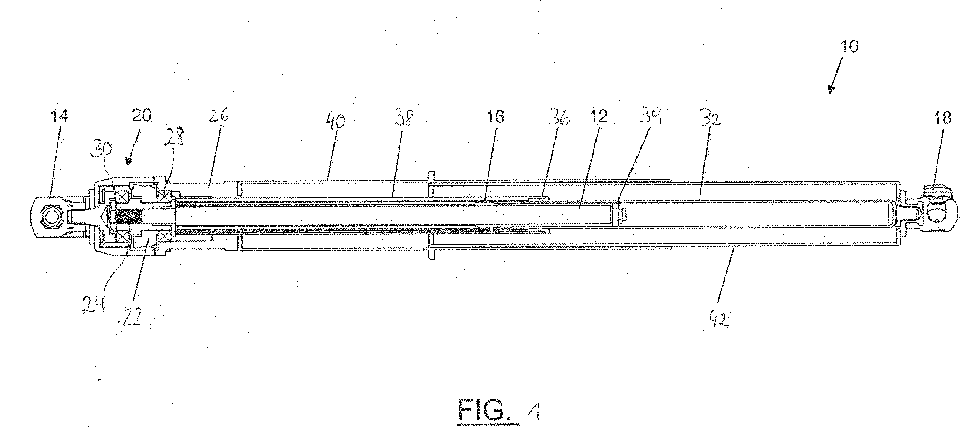

- Figur 1: eine Seitenquerschnittsansicht einer erfindungsgemäßen Spindelantriebseinrichtung.

In Figur 1 ist eine erfindungsgemäße Spindelantriebseinrichtung 10 dargestellt, welche beispielhaft für einen elektrischen Spindelantrieb beschrieben ist, wie er im Automobilbereich Einsatz findet. Derartige Spindelantriebe sind zum Öffnen und/oder Schließen eines bewegbaren Fahrzeugteils wie beispielsweise einer Fahrzeugtür oder Heckklappe vorgesehen.

Wie zu erkennen ist, umfasst die Spindelantriebseinrichtung 10 eine mit einem Außengewinde versehene Spindel 12, welche mit einer ersten Verbindungseinheit 14 zur Verbindung der Spindelantriebseinrichtung 10 mit einer übergeordneten, d.h. nicht zu der Spindelantriebseinrichtung 10 gehörenden, Baugruppe, wie beispielsweise einer Heckklappe eines Fahrzeugs, verbunden ist, und ein mit dem Außengewinde der Spindel 12 in Gewindeeingriff stehendes Gewindeeingriffselement 16, welches hier als Spindelmutter mit einer zweiten Verbindungseinheit 18 zur Verbindung der Spindelantriebseinrichtung 10 mit einer übergeordneten, d.h. nicht zu der Spindelantriebseinrichtung gehörenden, Baugruppe, wie beispielsweise einer Karosserie eines Fahrzeugs, verbunden ist.

Die Spindelantriebseinrichtung 10 umfasst ferner eine Antriebsbaugruppe 20, welche einen Elektromotor als Antriebseinheit aufweist und dazu eingerichtet ist, die Spindel 12 anzutreiben.

Gemäß dem gezeigten Ausführungsbeispiel trägt eine nicht erkennbare Abtriebswelle der Antriebseinheit eine Schneckenwelle, welche wiederum mit einem als Schneckenrad ausgebildeten Antriebsrad 22 kämmt. Das Antriebsrad 22 ist über eine Keilwelle 24 mit der Spindel 12 drehfest verbunden.

Die Antriebsbaugruppe 20 ist in einem Antriebsbaugruppengehäuse 26 aufgenommen, welches hier aus Kunststoff gefertigt ist.

Das Antriebsrad 22 und die Spindel 12 sind über ein Lager 28 relativ zu einem zylindrischen Kopplungselement 30 und relativ zu dem Antriebsbaugruppengehäuse 26 gelagert.

Das Kopplungselement 36 verbindet die erste Verbindungseinheit 14 mit der Spindel 12 derart, dass eine Verlagerung dieser beiden Elemente voneinander weg in einer axialen Richtung der Spindel 12 verhindert wird.

Ein mit dem Gewindeeingriffselement 16 verbundenes Stahlrohr 32 ist mit der zweiten Verbindungseinheit 18verbunden.

In der geschnittenen Seitenansicht von Figur 1 ist erkennbar, wie die Spindelmutter 16 mit der Spindel 12 in Gewindeeingriff steht. Auf eine Rotation der Spindel 12 hin wird das Gewindeeingriffselement 16 entsprechend der Rotationsrichtung und der Art des Gewindes der Spindel 12 in Figur 1 nach links oder rechts verlagert, so dass über das Stahlrohr 32 die zweite Verbindungseinheit 18 auf die erste Verbindungseinheit 14 zu oder von dieser weg verlagert wird.

Das in Figur 1 rechte Ende der Spindel 12 ist über einen Führungsring 34 in dem Stahlrohr 32 gelagert, welches über eine Führungsbuchse 36 in einem Führungsrohr 38 gelagert und aufgenommen ist.

Ferner ist in Figur 1 zu erkennen, dass die erste Verbindungseinheit 14 mit einem ersten Hüllrohr 40 verbunden ist und die zweite Verbindungseinheit 18 mit einem zweiten Hüllrohr 42 verbunden ist, wobei das zweite Hüllrohr 42 in einer teleskopierbaren Weise in das erste Hüllrohr 40 eintauchen kann.

Insbesondere bei elektrischen Spindelantrieben ist der Einsatz von Trapezgewindespindeln vorteilhaft, da diese hohe axiale Kräfte übertragen können. Im Unterschied zum Stand der Technik weist die erfindungsgemäße Spindelantriebseinrichtung eine Trapezspindel auf, welche aus einem Kohlenstoffstahl ausgebildet ist. Damit können die Rohmaterialkosten deutlich reduziert werden. Eine Wärmebehandlung der Spindel 12 ermöglicht die Erfüllung der Anforderungen in Bezug auf Korrosion und Verschleiß.

Als kostengünstiges Spindelrohmaterial kommen beispielsweise insbesondere C-Stähle, wie zum Beispiel C15 aus der Gruppe unlegierte Einsatzstähle [DIN EN 10084], C25 aus der Gruppe unlegierte Vergütungsstähle [DIN EN 10083-2] oder andere C-Stähle aus den allgemeinen Baustählen (inklusive C-Stähle mit Zusatzsymbolen, wie zum Beispiel C45U oder C15R) in Frage.

Die Spindel 12 ist wenigstens mittels eines Nitrierprozesses wärmebehandelt, so dass diese eine verschleißbeständige Randschicht aufweist.

Nitrierverfahren wie Nitrocarburieren im Gas oder im Salzbad, welche hinsichtlich der Kosten besonders vorteilhaft sind, ermöglichen dabei eine Oberflächenhärtung, wobei der Kern des Bauteils unverändert bleibt und seine Festigkeit behält. Hierdurch kann das Verschleiß- und das Korrosionsverhalten der Spindel 12 ohne Auswirkungen auf ihre Kerneigenschaften verbessert werden. Durch eine Nachoxidation kann auf der beim Nitrieren entstehende Verbindungsschicht eine zusätzliche dünne Oxidschicht aufgebracht werden, welche die Korrosionsbeständigkeit zusätzlich verbessert. Die hierbei entstehende dunkle bzw. schwarze Oberfläche ist zum Teil eine zusätzliche Anforderung in der Automobilindustrie.

Wie bereits erwähnt ist die in Figur 1 gezeigte und beschriebene Spindelantriebseinrichtung 10 nicht beschränkend für die Erfindung zu sehen. Alternativ kann beispielsweise als Verbindungseinheit ein mit dem Gewindeeingriffselement 16, welches im Rahmen der Erfindung beispielhaft als Spindelmutter oder Schneckenrad ausgebildet sein kann, direkt oder indirekt verbundenes Verbindungselement bzw. Stellelement vorgesehen sein, welches gemäß dem jeweiligen Anwendungsfall einer Verbindung mit einem Fahrzeugteil (Karosserie, Tür, Heckklappe etc.) dient.

Das Stellelement kann dabei gemäß einer beispielhaften Ausführung auch ein mit einer Fahrzeugtür verbundenes Fangband sein. Weiter ist es möglich, dass das Gewindeeingriffselement 16 mittels eines Verbindungselements bzw. einer Halterung mit der Fahrzeugkarosserie verbunden ist.

Ebenso kann die Antriebsbaugruppe parallel oder im Wesentlichen senkrecht zu einer Spindelachse angeordnet werden.

## Patentansprüche

1. Spindelantriebseinrichtung (10), umfassend
eine mit einem Außengewinde versehene Spindel (12),
ein mit dem Außengewinde der Spindel (12) in Gewindeeingriff stehendes Gewindeeingriffselement (16),
eine Antriebsbaugruppe (20) mit einer Antriebseinheit (22), welche dazu eingerichtet ist, die Spindel (12) oder das Gewindeeingriffselement (16) anzutreiben, wobei die Spindel (12) oder das Gewindeeingriffselement (16) mit wenigstens einer Verbindungseinheit (14, 18) zur Verbindung der Spindelantriebseinrichtung (10) mit einer übergeordneten, nicht zu der Spindelantriebseinrichtung (10) gehörenden Baugruppe verbunden ist, **dadurch gekennzeichnet, dass** die Spindel (12) eine Trapezgewindespindel aus einem Kohlenstoffstahl und mittels wenigstens eines thermochemischen Verfahrens wärmebehandelt ist.

2. Spindelantriebseinrichtung (10) nach Anspruch 1,
**dadurch gekennzeichnet, dass** die Spindel (12) mittels mehrerer thermochemischen Verfahren wärmebehandelt ist.

3. Spindelantriebseinrichtung (10) nach Anspruch 1 oder 2,
**dadurch gekennzeichnet, dass** die Spindel (12) wenigstens mittels eines Nitrierprozesses wärmebehandelt ist, so dass die Spindel (12) eine verschleißbeständige Randschicht aufweist.

4. Spindelantriebseinrichtung (10) nach einem der vorhergehenden Ansprüche,
**dadurch gekennzeichnet, dass** die Spindel (12) oxidiert vorgesehen ist, so dass diese eine dunkle Oberfläche aufweist.

5. Spindelantriebseinrichtung (10) nach einem der vorhergehenden Ansprüche,
**dadurch gekennzeichnet, dass** die Spindel (12) mit einer ersten Verbindungseinheit (14) zur Verbindung der Spindelantriebseinrichtung (10) mit einer übergeordneten, nicht zu der Spindelantriebseinrichtung (10) gehörenden Baugruppe verbunden ist, und das Gewindeeingriffselement (16) mit einer zweiten Verbindungseinheit (18) zur Verbindung der Spindelantriebseinrichtung (10) mit einer übergeordneten, nicht zu der Spindelantriebseinrichtung (10) gehörenden Baugruppe verbunden ist.

6. Spindelantriebseinrichtung (10) nach einem der vorhergehenden Ansprüche 1 bis 4,
**dadurch gekennzeichnet, dass** als Verbindungseinheit ein mit dem Gewindeeingriffselement (16) direkt oder indirekt verbundenes Stellelement oder Verbindungselement vorgesehen ist.

7. Spindelantriebseinrichtung (10) nach einem der vorhergehenden Ansprüche,
**dadurch gekennzeichnet, dass** das Gewindeeingriffselement (16) als Spindelmutter oder Schneckenrad ausgebildet ist.

8. Spindelantriebseinrichtung (10) nach einem der vorhergehenden Ansprüche,
**dadurch gekennzeichnet, dass** die Spindelantriebseinrichtung (10) als elektrischer Spindelantrieb zum Öffnen und/oder Schließen eines bewegbaren Fahrzeugteils vorgesehen ist.

9. Übergeordnete Baugruppe mit einer Spindelantriebseinrichtung (10) nach einem der vorhergehenden Ansprüche.

10. Fahrzeug mit einer mit einer Spindelantriebseinrichtung (10) nach einem der vorhergehenden Ansprüche 1 bis 8, wobei die Spindelantriebseinrichtung zur Verstellung eines relativ zu einer Karosserie des Fahrzeugs bewegbaren Fahrzeugteils vorgesehen ist.
